# EUROPÄISCHE PATENTANMELDUNG

(11) **EP 4 167 180 A1**
(43) Veröffentlichungstag der Anmeldung: **19.04.2023**
(21) Anmeldenummer: 21202256.0
(22) Anmeldetag: 12.10.2021
(51) Int. Cl.: G06T 7/00

(54) **VERFAHREN ZUR BESTIMMUNG EINES SCHÄRFEZUSTANDS EINER SÄGEKETTE EINER MOTORKETTENSÄGE**

(71) Anmelder: Andreas Stihl AG & Co. KG, 71336 Waiblingen (DE)
(72) Erfinder: Weber, Marco, 71522 Backnang (DE); Lux, Thomas, 73553 Alfdorf (DE); Jäger, Luis, 70374 Stuttgart (DE); Baburaj, Siddharth, 79108 Freiburg im Breisgau (DE)
(74) Vertreter: Karzel, Philipp

(57) **Zusammenfassung**

Die Erfindung betrifft ein Verfahren zur Bestimmung eines Schärfezustands einer Sägekette (1) einer Motorkettensäge (2). Die Sägekette (1) umfasst zumindest ein Schneidglied (3) mit einer Dachschneide (4). Mit einer Abbildungsvorrichtung (5) wird eine Dachschneiden-Abbildung von der Dachschneide (4) des Schneidglieds (3) aufgenommen. Mit einer Auswerteeinheit (6), die ein künstliches neuronales Netzwerk umfasst, wird eine Auswertung der Dachschneiden-Abbildung vorgenommen. In der Auswerteeinheit (6) ist ein scharfer Zustand und ein stumpfer Zustand der Sägekette (1) definiert. Die Sägekette (1) wird anhand der Dachschneiden-Abbildung unter Verwendung des künstlichen neuronalen Netzwerks dem scharfen Zustand oder dem stumpfen Zustand zugeordnet.

## Beschreibung

Die Erfindung betrifft ein Verfahren zur Bestimmung eines Schärfezustands einer Sägekette einer Motorkettensäge nach dem Oberbegriff des Anspruchs 1.

Bei der Benutzung einer Motorkettensäge mit einer Sägekette ist der Schärfezustand der Sägekette von entscheidender Bedeutung für ein effizientes und komfortables Arbeiten. Durch Verschleiß wird die Sägekette nach längerer Benutzung stumpf. Dies kann die Sägeleistung erheblich reduzieren. Das Arbeiten mit einer stumpfen Sägekette ist mühsam, zeitaufwändig und liefert zum Teil ein unbefriedigendes Schnittergebnis.

Um zuverlässig zu überprüfen, ob die Reduzierung der Sägeleistung tatsächlich an einer stumpfen Sägekette liegt, wurden im Stand der Technik bisher verschiedene Ansätze verfolgt. Es wurde beispielsweise versucht, anhand der Auswertung der Form der Sägespäne auf den Schärfezustand der Sägekette rückzuschließen. Die Form der Sägespäne wird jedoch durch zu viele Einflussfaktoren beeinflusst. Dies gilt auch für eine Temperaturmessung an der Sägekette. Die Temperatur der Sägekette ist nicht nur abhängig von der Schärfe der Sägekette, sondern auch beispielsweise von der Feuchtigkeit des geschnittenen Holzes. Ein weiterer Ansatz ist das Ausmessen der Breite der Dachschneide eines oder mehrerer Schneidglieder der Sägekette. Hierzu wird typischerweise ein Foto von der Dachschneide gemacht. Aufgrund der geringen Größe einer Dachschneide muss ein solches Foto jedoch eine sehr hohe Auflösung aufweisen. Für eine automatisierte Auswertung eines solchen Fotos ist es erforderlich, dass das Foto unter absolut reproduzierbaren, gleichbleibenden Bedingungen aufgenommen wird. Hintergrund, Lichtverhältnisse und Zoomausschnitt sind genau vorgegeben. Solche Anforderungen, die nahezu Laborbedingungen gleichkommen, sind für eine schnelle Ermittlung des Schärfezustands der Sägekette unpraktikabel. Beim Einsatz der Sägekette ist es mit solchen Verfahren unmöglich, auf schnelle Weise festzustellen, ob der Zustand der Sägekette scharf oder unscharf ist.

Der Erfindung liegt die Aufgabe zugrunde, ein gattungsgemäßes Verfahren derart weiterzubilden, dass eine schnelle und einfache Bestimmung des Schärfezustands einer Sägekette einer Motorkettensäge auf zuverlässige Weise möglich ist.

Diese Aufgabe wird durch ein Verfahren mit den Merkmalen des Anspruchs 1 gelöst.

Erfindungsgemäß wird die Dachschneiden-Abbildung mit einer Auswerteeinheit ausgewertet, die ein künstliches neuronales Netzwerk umfasst. In der Auswerteeinheit sind ein scharfer Zustand der Sägekette und ein stumpfer Zustand der Sägekette definiert. Die Sägekette wird anhand der Dachschneiden-Abbildung unter Verwendung des künstlichen neuronalen Netzwerks dem scharfen Zustand oder dem stumpfen Zustand zugeordnet. Die Definition des scharfen Zustands und des stumpfen Zustands kann beispielsweise dadurch gegeben sein, dass die Ausgangssignale der Auswertung der Pixel der Dachschneiden-Abbildung bestimmte Kriterien erfüllen müssen. Die Pixel der Dachschneiden-Abbildung sind zweckmäßig die Eingangswerte des künstlichen neuronalen Netzwerks. Jedem Pixel sind insbesondere eine Relativposition in Relation zu den anderen Pixeln, bevorzugt zu einem Referenzpixel, und ein Farbwert zugeordnet. Der Farbwert kann beispielsweise ein RGB- oder ein CMYK-Wert oder eine vergleichbare Farbangabe sein. Aufgrund der Verwendung des künstlichen neuronalen Netzwerks liefert das Verfahren auch bei unterschiedlichsten Bedingungen während der Aufnahme der Dachschneiden-Abbildung zuverlässig gute Ergebnisse. Das künstliche neuronale Netzwerk greift vorteilhaft auf einen Datensatz aus Dachschneiden-Abbildungen zurück, die entweder dem scharfen Zustand oder dem stumpfen Zustand zugeordnet sind. Anhand dieses Datensatzes kann das künstliche neuronale Netzwerk entscheiden, ob die Sägekette, von der eine neue Dachschneiden-Abbildung aufgenommen wird, dem stumpfen Zustand oder dem scharfen Zustand zuzuordnen ist. Aus dem Datensatz und der Vorgabe der Zuordnung zum scharfen oder zum stumpfen Zustand hat das neuronale Netzwerk gelernt, verschiedene Eingabeparameter, verschiedene Neuronen und verschiedene Neuronenschichten so zu gewichten und auszuwerten, dass mit hoher Erfolgswahrscheinlichkeit die Dachschneiden-Abbildung einer Sägekette mit unbekanntem Schärfezustand dem scharfen oder dem stumpfen Zustand korrekt zugeordnet wird. Insbesondere ist die Erfolgswahrscheinlichkeit für eine korrekte Zuordnung der Dachschneiden-Abbildung zu dem scharfen Zustand oder dem unscharfen Zustand mindestens 70%, vorteilhaft mindestens 80%, bevorzugt mindestens 90%. Es kann vorgesehen sein, dass die erlernte Gewichtung der Eingangsparameter als Gewichtungsparameter in dem neuronalen Netzwerk hinterlegt ist. Bei einer Hinterlegung der Gewichtungsparameter im neuronalen Netzwerk kann vorgesehen sein, dass im neuronalen Netzwerk kein Datensatz an Dachschneiden-Abbildungen mit bekannter Zuordnung zu dem scharfen Zustand oder dem stumpfen Zustand hinterlegt ist.

Insbesondere wird die Dachschneiden-Abbildung unter undefinierten Lichtverhältnissen in einem undefinierten Winkel aufgenommen. Es muss demnach nicht auf reproduzierbare Aufnahmebedingungen geachtet werden, um eine zuverlässig richtige Zuordnung zum scharfen oder zum stumpfen Zustand zu erreichen.

Vorteilhaft wird die Dachschneiden-Abbildung in digitaler Form an die Auswerteeinheit übergeben. Dadurch ist eine schnelle Zuordnung zum scharfen Zustand oder stumpfen Zustand möglich.

Vorteilhaft weist die Dachschneiden-Abbildung eine Auflösung von mindestens 10 px/mm, insbesondere von mindestens 12 px/mm auf. Dadurch ist die Auflösung hoch genug, um eine zuverlässige und schnelle Zuordnung zum scharfen oder zum stumpfen Zustand einer Sägekette mithilfe des erfindungsgemäßen Verfahrens zu ermöglichen.

In vorteilhafter Weiterbildung der Erfindung ist vorgesehen, dass die Dachscheiden-Abbildung eine Auflösung von höchstens 128 px/mm, insbesondere von höchstens 110 px/mm, insbesondere von höchstens 100 px/mm, insbesondere von höchstens 90 px/mm, insbesondere von höchstens 64 px/mm, insbesondere von höchstens 32 px/mm, bevorzugt von höchstens 24 px/mm aufweist. Dadurch ist es möglich, auch Dachschneiden-Abbildungen mit einer vergleichsweise kostengünstigen Abbildungsvorrichtung zu erstellen und dennoch eine zuverlässig richtige Zuordnung zum scharfen oder stumpfen Zustand zu erreichen. Bei Anfertigung von Dachschneiden-Abbildungen in digitaler Form ist die Dateigröße durch die Begrenzungen der Auflösung gering. Dadurch kann Speicherplatz gespart werden. Die Dachschneiden-Abbildung kann schnell an die Auswerteeinheit übergeben werden. Eine Dachschneiden-Abbildung mit einer kleinen Auflösung kann in der Auswerteeinheit unter Verwendung des neuronalen Netzwerks schnell verarbeitet werden.

Insbesondere funktioniert das Verfahren zur Bestimmung des Schärfezustands der Sägekette auch mit einer Dachschneiden-Abbildung mit einer Auflösung von höchstens 128 px/mm, insbesondere von höchstens 110 px/mm, insbesondere von höchstens 100 px/mm, insbesondere von höchstens 90 px/mm, insbesondere von höchstens 64 px/mm, insbesondere von höchstens 32 px/mm, bevorzugt von höchstens 24 px/mm mit einer Erfolgsquote für eine korrekte Zuordnung von mindestens 80%, insbesondere von mindestens 90%.

Vorteilhaft besitzt die Abbildungsvorrichtung einen Bildsensor mit höchstens 12 Megapixeln, insbesondere mit höchstens 10 Megapixeln. Zweckmäßig weist der Bildsensor eine Maximalgröße von 7,2 mm x 5,4 mm, insbesondere von höchstens 5,8 mm × 4,3 mm, insbesondere von höchstens 5,4 mm × 4,0 mm bevorzugt von höchstens 4,5 mm × 3,4 mm auf. Die verschiedenen Maximalgrößen des Bildsensors können beliebig mit den verschiedenen Anzahlen an Megapixeln kombiniert werden.

Zweckmäßig sind die Auswerteeinheit und das künstliche neuronale Netzwerk so ausgelegt, dass auch bei einer Abbildungsvorrichtung mit einem Bildsensor mit höchstens 12 Megapixeln und einer Maximalgröße von 7,2 mm × 5,4 mm, insbesondere von höchstens 4,5 mm × 3,4 mm, eine Erfolgsquote für eine korrekte Zuordnung von mindestens 80%, insbesondere von mindestens 90% erreicht wird. Es kann auch vorgesehen sein, dass die Auswerteeinheit und das künstliche neuronale Netzwerk so ausgelegt, dass auch bei einer Abbildungsvorrichtung mit einem Bildsensor mit höchstens 10 Megapixeln und einer Maximalgröße von 5,8 mm × 4,3 mm, insbesondere von höchstens 4,5 mm × 3,4 mm, eine Erfolgsquote für eine korrekte Zuordnung von mindestens 80%, insbesondere von mindestens 90% erreicht wird.

In vorteilhafter Weiterbildung der Erfindung ist vorgesehen, dass bei der Auswertung der Dachschneiden-Abbildung zunächst ein Bildausschnitt ausgewählt wird, der die Dachschneide, insbesondere eine Schneidkante der Dachschneide zeigt. Zweckmäßig beträgt die Anzahl der Bildpunkte des Bildausschnitts höchstens 64 px × 64 px, insbesondere höchstens 32 px × 32 px. Insbesondere erfolgt die Auswahl des Bildausschnitts mit Hilfe eines zweiten künstlichen neuronalen Netzwerks. Vorteilhaft umfasst die Auswerteeinheit das zweite künstliche neuronale Netzwerk. Zweckmäßig ist das zweite künstliche neuronale Netzwerk Bestandteil der Auswerteeinheit. Insbesondere ist das zweite künstliche neuronale Netzwerk auf die Erkennung von Dachschneiden, insbesondere von Schneidkanten angelernt. Zweckmäßig ist der Typ des zweiten neuronalen Netzwerks identisch zu dem Typ des neuronalen Netzwerks zur Zuordnung zu dem scharfen Zustand oder dem stumpfen Zustand. Vorteilhaft wird die weitere Auswertung der Dachschneiden-Abbildung zur Zuordnung zu dem scharfen Zustand oder zu dem stumpfen Zustand ausschließlich anhand des Bildausschnitts vorgenommen.

Vorteilhaft kann für die erfolgreiche Zuordnung der Sägekette zum scharfen Zustand oder zum stumpfen Zustand die Auflösung der Dachschneiden-Abbildung um mindestens einen Faktor 10 kleiner sein als bei einem herkömmlichen Messverfahren zur Schärfebestimmung mittels Ausmessen einer Breite der Dachschneide aus einer Dachschneiden-Abbildung, wobei der Messfehler für das Ausmessen der Breite bei einem herkömmlichen Messverfahren kleiner als 1% ist. Bei herkömmlichen Messverfahren ist es bekannt, dass die Zuordnung zu einem stumpfen oder scharfen Zustand über einen Grenzwert für die Breite der Dachschneide entschieden werden kann. Die Dachschneide weist eine Schneidkante auf, die sich in einer Längsrichtung erstreckt. Die Breite der Dachschneide ist senkrecht zur Längsrichtung der Kante der Dachschneide gemessen. Eine fiktive, ideale Dachschneide weist zwei Flanken auf, die in einem spitzen Winkel an der Schneidkante zusammentreffen. Die beiden Flanken lassen sich durch Ebenen beschreiben. In Realität ist die Kante der Dachschneide immer abgerundet. An die ebenen Flanken der Dachschneide lassen sich jedoch Ebenen anlegen, so dass die ebenen Flanken jeweils in einer der Ebenen verlaufen. Die Ebenen sind in einem spitzen Winkel zueinander orientiert. Die beiden Punkte bzw. Linien, in denen die beiden Flanken jeweils die Ebenen gerade noch berühren, sind die Punkte bzw. Linien, zwischen denen die Breite einer Dachschneide gemessen wird.

Üblicherweise beträgt die Länge der Schneide einer Dachschneide von 3 mm bis 5 mm. Bei derartig kleinen Objektgrößen ist eine sehr hohe Auflösung einer Dachschneiden-Abbildung erforderlich, um einen Messfehler von unter 1% beim Ausmessen der Breite der Dachschneide zu erhalten. Ein Messfehler von unter 1% ist erforderlich, um überhaupt eine Aussage darüber treffen zu können, ob die Dachschneide und die zugehörige Sägekette scharf oder stumpf sind. Vorliegend ist die Anforderung an die Auflösung der Dachschneiden-Abbildung vorteilhaft um mindestens einen Faktor 10 kleiner als beim herkömmlichen Messverfahren. Auch mit einer um einen Faktor 10 kleineren Auflösung der Dachschneiden-Abbildung kann zuverlässig eine Entscheidung darüber getroffen werden, ob die Sägekette dem scharfen oder dem stumpfen Zustand zuzuordnen ist.

Die Dachschneide 4 ist an dem Dachabschnitt 18 ausgebildet. Der Dachabschnitt 18 weist eine Höhe h auf. Die Höhe h des Dachabschnitts 18 ist in Laufrichtung 25 der Sägekette 1 gemessen. Die Höhe h des Dachabschnitts 18 beträgt weniger als 8 mm, insbesondere weniger als 6 mm. Die Laufrichtung 25 verläuft quer zur Längsrichtung der Schneidkante der Dachschneide 4. Die Höhe h des Dachabschnitts 18 beträgt mindestens 1 mm, insbesondere mindestens 2 mm.

Insbesondere beträgt die Breite der Dachschneide weniger als 500 µm, insbesondere weniger als 300 µm, insbesondere weniger als 150 µm.

In vorteilhafter Weiterbildung der Erfindung sind in der Auswerteeinheit genau zwei Zustände für den Schärfezustand der Sägekette definiert. Dadurch ist eine schnelle Entscheidung darüber, welchem Zustand die Sägekette zuzuordnen ist, möglich. Der Benutzer erhält eine klare Aussage darüber, ob die Sägekette weiterverwendet werden kann oder nicht.

Zweckmäßig ist in dem künstlichen neuronalen Netzwerk ein Datensatz von digitalen Abbildungen von Dachschneiden von scharfen Sägeketten und von Dachschneiden von stumpfen Sägeketten hinterlegt. Vorteilhaft wird eine Sägekette als scharf bezeichnet, wenn sie mindestens 80%, insbesondere mindestens 70% der Schnittleistung einer Referenzsägekette bei gleichen Arbeitsbedingungen liefert. Insbesondere wird eine Sägekette als stumpf bezeichnet, wenn sie höchstens 65%, insbesondere höchstens 60% der Schnittleistung der Referenzsägekette bei gleichen Arbeitsbedingungen liefert. Vorteilhaft sind die scharfen Sägeketten dem scharfen Zustand zugeordnet, und die stumpfen Sägeketten sind dem stumpfen Zustand zugeordnet. Es kann auch ein Zwischenzustand vorgesehen sein, in dem die Sägekette weder als stumpf noch als scharf kategorisiert wird.

Vorteilhaft kann vom Benutzer ein Schwellwert für die Schnittleistung einer Sägekette im Vergleich zu einer Referenzsägekette vorgegeben werden, der den scharfen Zustand vom stumpfen Zustand trennt. Anhand dieses vorgegebenen Schwellwerts ordnet das neuronale Netzwerk dann die im Datensatz hinterlegten Abbildungen von Dachschneiden dem scharfen oder dem stumpfen Zustand zu. Es kann auch vorgesehen sein, dass der Benutzer zwischen einem Profimodus und einem Hobbymodus wählt. Diese Information wird dann dem neuronalen Netzwerk übermittelt. Im Profimodus ist der Schwellwert bevorzugt 80%. Im Hobbymodus ist der Schwellwert bevorzugt 70%.

Es kann auch vorgesehen sein, dass Sägeketten als scharf bezeichnet werden, wenn sie mindestens 70% der Schnittleistung der Referenzsägekette bei gleichen Arbeitsbedingungen liefern. Dann werden Sägeketten als stumpf bezeichnet, wenn sie weniger als 70% der Schnittleistung der Referenzsägekette bei gleichen Arbeitsbedingungen liefern.

Insbesondere entscheidet das künstliche neuronale Netzwerk anhand des Datensatzes und der Dachschneiden-Abbildung, ob die Sägekette dem stumpfen Zustand oder dem scharfen Zustand zuzuordnen ist.

Es kann aber auch vorgesehen sein, dass in der Auswerteeinheit die aus dem Anlernen des künstlichen neuronalen Netzwerks mit dem Datensatz von digitalen Abbildungen erhaltenen Gewichtungsparametern hinterlegt sind. Diese Gewichtungsparameterkönnen anstatt oder zusätzlich zu dem Datensatz von digitalen Abbildungen in der Auswerteeinheit hinterlegt sein. Das künstliche neuronale Netzwerk generiert die Gewichtungsparametervorteilhaft selbst durch Rechnungsversuche. Die Rechnungsversuche, die das vorgegebene Ergebnis mit dem Datensatz von digitalen Abbildungen liefern, entscheiden darüber, welche Parameter wichtig sind und wie sie gewichtet werden. Diese Information wird dann in Form der Gewichtungsparameter gespeichert. Diese Gewichtungsparameterkönnen dann bei der Dachschneiden-Abbildung von einer Sägekette mit unbekanntem Schärfezustand angewendet werden. Vorteilhaft werden die Gewichtungsparameter anhand digitaler Abbildungen bestimmt, auf denen Dachschneiden in sauberem Zustand vor gleichem, insbesondere dunklem Hintergrund aufgenommen sind. Insbesondere sind die digitalen Abbildungen zum Anlernen des künstlichen neuronalen Netzwerks unter identischen Aufnahmebedingungen aufgenommen. Dadurch ist ein erfolgreiches Anlernen des neuronalen Netzwerks auch mit einem sehr kleinen Datensatz möglich. Vorteilhaft umfasst der Datensatz mindestens 1000, insbesondere mindesten 1500, insbesondere mindestens 8000 digitale Abbildungen. Insbesondere umfasst der Datensatz weniger als 2500 digitale Abbildungen. Es kann auch vorgesehen sein, dass der Datensatz anstatt der genannten Mindest- und Höchstanzahlen an digitalen Abbildungen entsprechende Mindest- und Höchstanzahlen an Gewichtungsparametern umfasst. Vorteilhaft weisen die digitalen Abbildungen eine Auflösung von mindestens 10 px/mm, insbesondere von mindestens 12 px/mm auf. Vorteilhaft weisen die digitalen Abbildungen eine Auflösung von höchstens 128 px/mm, insbesondere von höchstens 64 px/mm, insbesondere von höchstens 32 px/mm, bevorzugt von höchstens 24 px/mm auf. Bevorzugt sind die digitalen Abbildungen unter Verwendung eines Blitzlichts aufgenommen.

In vorteilhafter Weiterbildung der Erfindung kann vorgesehen sein, dass das neuronale Netzwerk während der Anwendung weiter mit Daten gefüttert wird. Die aufgenommenen Dachschneiden-Abbildungen können dabei mit anderen Messgrößen wie beispielsweise der Temperatur der Sägekette verknüpft werden. Es kann vorgesehen sein auch hieraus Rückschlüsse auf den Zustand der Sägekette zu ziehen. Dadurch kann das neuronale Netzwerk weiter Lernen. Es kann auch vorgesehen sein, dass diese während der Anwendung entstehenden Daten zentral gesammelt werden, beispielsweise durch eine kabellose Verbindung einer Steuereinheit mit eine zentralen Sammelstelle. Zweckmäßig gibt die Auswerteeinheit den Schärfezustand der Sägekette in Form einer Anzeige als scharf oder stumpf an. Dadurch hat der Benutzer eine unmittelbare Information darüber, ob die untersuchte Sägekette stumpf oder scharf ist.

In vorteilhafter Weiterbildung der Erfindung wird die Dachschneiden-Abbildung unter Einsatz eines Blitzlichts aufgenommen. Es hat sich gezeigt, dass eine Dachschneide einer stumpfen Sägekette das Blitzlicht in größerem Maße reflektiert als die Dachschneide einer scharfen Sägekette. Dadurch sind bei einer stumpfen Sägekette sehr viel mehr hellere Pixel in der Dachschneiden-Abbildung zu erkennen als bei einer scharfen Sägekette. Dieser deutliche Unterschied in den Dachschneiden-Abbildungen von scharfen und stumpfen Sägeketten, die mit Blitzlicht aufgenommen wurden, erleichtert die Auswertung in der Auswerteeinheit deutlich. Eine Zuordnung zum scharfen oder zum stumpfen Zustand ist noch zuverlässiger möglich.

In vorteilhafter Weiterbildung der Erfindung gibt die Auswerteeinheit anhand des ermittelten Schärfezustands der Sägekette eine Handlungsanweisung aus. Insbesondere umfasst die Handlungsanweisung eine Anleitung zum Nachschärfen der Sägekette. Bevorzugt umfasst die Anleitung zum Nachschärfen der Sägekette die Angabe von benötigtem Werkzeug, insbesondere von einem Feilentyp. Es kann auch vorgesehen sein, dass die Handlungsanweisung eine Kaufempfehlung für ein Ersatzteil, insbesondere für eine neue Sägekette, ein neues Kettenrad und/oder eine neue Führungsschiene umfasst. Dadurch weiß der Benutzer unmittelbar, was er zu tun hat, um wieder eine ausreichend scharfe Sägekette zur Verfügung zu haben.

In vorteilhafter Weiterbildung der Erfindung ist vorgesehen, dass mindestens zwei, insbesondere mindestens drei Dachschneiden-Abbildungen von mindestens zwei, insbesondere von mindestens drei verschiedenen Dachschneiden der Sägekette gemacht werden, und dass die Auswerteeinheit die mindestens zwei, insbesondere die mindestens drei Dachschneiden-Abbildungen auswertet, um zu entscheiden, ob die Sägekette dem stumpfen Zustand oder dem scharfen Zustand zuzuordnen ist. Dadurch kann eine noch bessere Zuverlässigkeit der Zuordnung zum scharfen oder zum stumpfen Zustand der Sägekette erreicht werden. Dies kann insbesondere aufgrund der kleinen Größe der Dachschneiden und der kleinen Breite einer Dachschneide vorteilhaft sein.

In vorteilhafter Weiterbildung der Erfindung sind die Abbildungsvorrichtung und die Auswerteeinheit zusammen in einem einzigen tragbaren Gerät integriert. Dies erleichtert die Aufnahme und Auswertung einer Dachschneiden-Abbildung. Eine schnelle und unkomplizierte Durchführung des Verfahrens ist möglich.

Ein Ausführungsbeispiel der Erfindung ist im Folgenden anhand der Zeichnung erläutert. Es zeigen:
- Fig. 1: eine schematische Darstellung einer Motorkettensäge mit einer Sägekette,
- Fig. 2 und 3: perspektivische Darstellungen eines Ausschnitts der Sägekette,
- Fig. 4 und 5: Seitenansichten des Ausschnitts der Sägekette aus den Figuren 2 und 3,
- Fig. 6: eine Seitenansicht eines Schneidglieds der Sägekette,
- Fig. 7: eine Draufsicht auf das Schneidglied in Richtung des Pfeils VII in Fig. 6,
- Fig. 8: einen Schnitt entlang der Linie VIII-VIII in Fig. 6,
- Fig. 9: ein Foto einer Dachschneide eines Schneidglieds einer scharfen Sägekette,
- Fig. 10: ein Foto einer Dachschneide eines Schneidglieds einer stumpfen Sägekette,
- Fig. 11: Höhenprofile der Dachschneide aus Fig. 9,
- Fig. 12: Höhenprofile der Dachschneide aus Fig. 10 und
- Fig. 13: eine schematische Darstellung eines tragbaren Geräts mit einer Abbildungsvorrichtung und einer Auswerteeinheit.

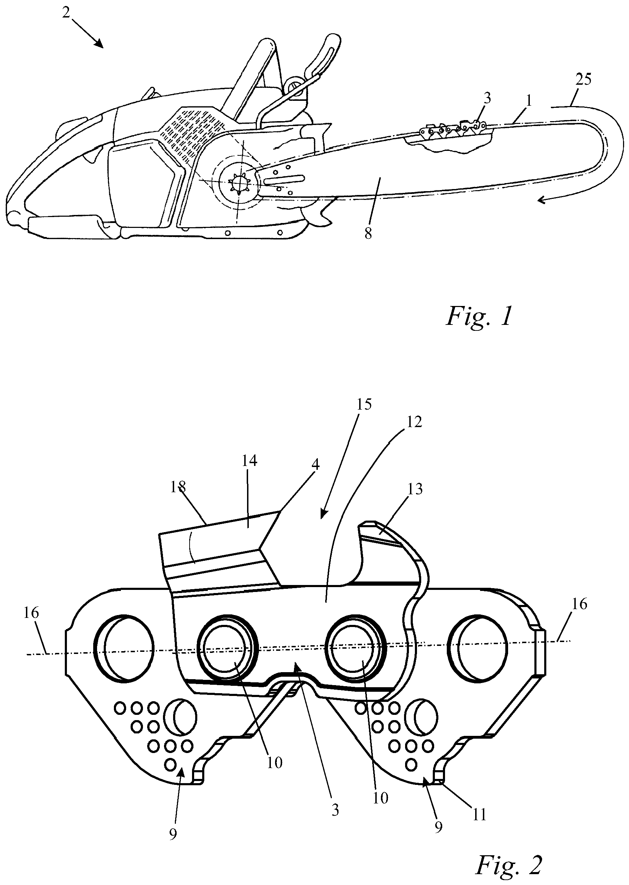

Fig. 1 zeigt eine schematische Darstellung einer Motorkettensäge 2. Die Motorkettensäge 2 besitzt eine Sägekette 1. Die Sägekette 1 läuft auf einer Führungsschiene 8 um. Die Sägekette 1 läuft in einer Laufrichtung 25 um die Führungsschiene 8 um. Die Sägekette 1 ist von einem nicht dargestellten Motor angetrieben. Die Sägekette 1 umfasst ein Schneidglied 3.

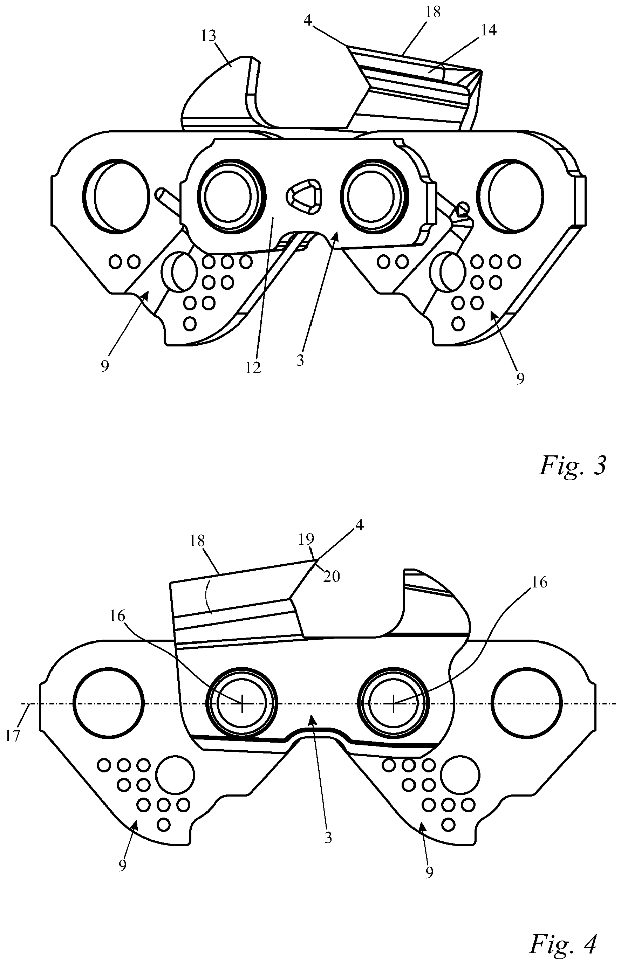

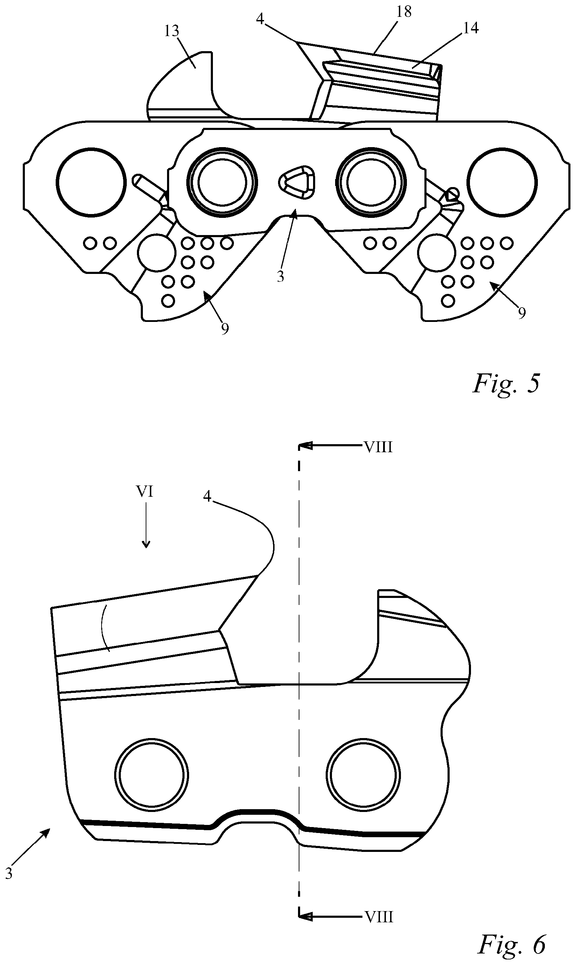

Die Figuren 2 bis 5 zeigen einen Abschnitt der Sägekette 1. Die Sägekette 1 besitzt Treibglieder 9. Die Treibglieder 9 sind über Verbindungsbolzen 10 mit dem Schneidglied 3 verbunden. Das Treibglied 9 besitzt einen Treibansatz 11. Beim Umlauf der Sägekette 1 um die Führungsschiene 8 ragt der Treibansatz 6 des Treibglieds 9 in eine Führungsnut der Führungsschiene ein. Die Treibansätze 11 werden von einem Antriebsritzel der Motorkettensäge 2 angetrieben. Die Verbindungsbolzen 10 sind an Lagerstellen des Schneidglieds 3 angeordnet. Die Lagerstellen besitzen jeweils Längsmittelachsen 16, die die Schwenkachsen der Glieder der Sägekette 1 bilden. Die Längsmittelachsen 16 spannen eine in Fig. 4 dargestellte Lagerstellenebene 17 auf. Die Lagerstellen sind in einem Grundkörper 12 des Schneidglieds 3 ausgebildet. Der Grundkörper 12 ist bevorzugt eben ausgebildet. Am Grundkörper 12 sind ein Tiefenbegrenzer 13 und ein Schneidzahn 14 angeordnet. Zwischen dem Tiefenbegrenzer 13 und dem Schneidzahn 14 ist eine Aussparung 15 angeordnet.

Der Schneidzahn 14 besitzt einen Dachabschnitt 18, in dem der Schneidzahn 14 näherungsweise parallel zu den Längsmittelachsen 16, bzw. zu der Lagerstellenebene 17 verläuft. Der Dachabschnitt 18 weist eine Dachschneide 4 auf. Die Dachschneide 4 ist zum Eingriff in ein Werkstück vorgesehen. Die Dachschneide 4 ist eine Schneidkante. Die Dachschneide 4 ist der Bereich des Schneidzahns 14, der in Laufrichtung der Sägekette 1 am weitesten vorne liegt.

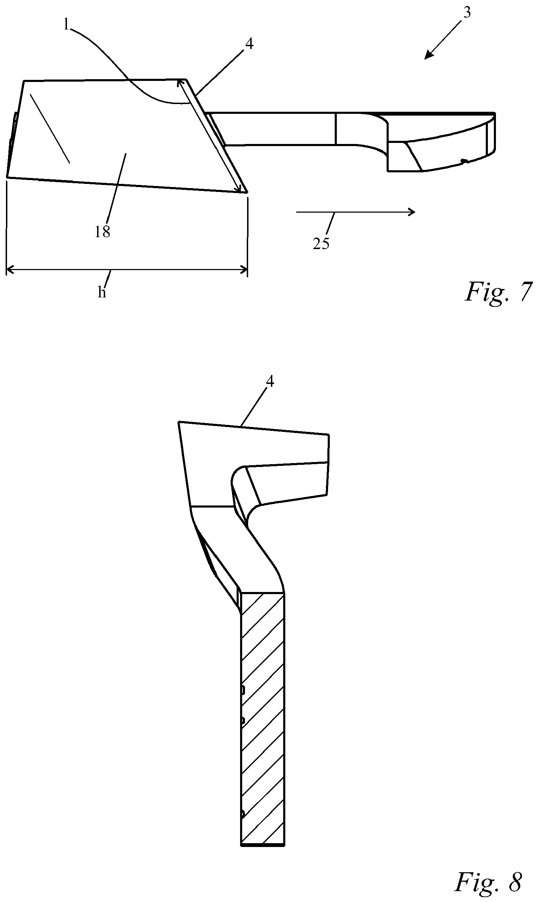

Fig. 7 zeigt eine Draufsicht von oben auf den Dachabschnitt 18 des Schneidzahns 14. Die Dachschneide 4 verläuft quer, im Ausführungsbeispiel schräg zur Laufrichtung 25 der Sägekette 1. Die Dachschneide 4 erstreckt sich längs einer Längsrichtung 26. Die Längsrichtung 26 verläuft schräg zur Laufrichtung 25. Die Dachschneide 4 besitzt eine Länge 1. Die Länge 1 ist in Längsrichtung 26 gemessen. Die Länge 1 der Dachschneide 4 beträgt von 3 mm bis 5 mm.

Die Dachschneide 4 ist an dem Dachabschnitt 18 ausgebildet. Der Dachabschnitt 18 weist eine Höhe h auf. Die Höhe h des Dachabschnitts 18 ist in Laufrichtung 25 der Sägekette 1 gemessen. Die Höhe h des Dachabschnitts 18 beträgt weniger als 8 mm, insbesondere weniger als 6 mm. Die Laufrichtung 25 verläuft quer zur Längsrichtung der Schneidkante der Dachschneide 4. Die Höhe h des Dachabschnitts 18 beträgt mindestens 1 mm, insbesondere mindestens 2 mm.

Im Betrieb der Motorsäge 2 läuft die Sägekette 1 um die Führungsschiene 8 um. Die Schneidglieder 3 greifen in das zu sägende Werkstück ein. Hierbei wird ein Schnitt in das Werkstück durch die Dachschneide 4 bewirkt. Durch diesen Einsatz verschleißt die Dachschneide mit der Zeit. Wie in Fig. 4 dargestellt, weist die Dachschneide 4 eine obere Flanke 19 und eine untere Flanke 20 auf. Die obere Flanke 19 ist beim Umlauf der Sägekette 1 um die Führungsschiene 8 außenliegend angeordnet. Die untere Flanke 20 ist beim Umlauf um die Führungsschiene 8 innenliegend angeordnet. Die obere Flanke 19 und die untere Flanke 20 erstrecken sich jeweils in verschiedenen Ebenen. Die obere Flanke 19 und die untere Flanke 20 laufen spitz zusammen. An der Spitze der zusammenlaufenden Flanken 19 und 20 ist die Dachschneide 4 ausgebildet. Durch die Abnutzung der Dachschneide 4 im Betrieb wird die Dachschneide 4 nach und nach abgerundet. Dadurch wird die Sägekette 1 unscharf.

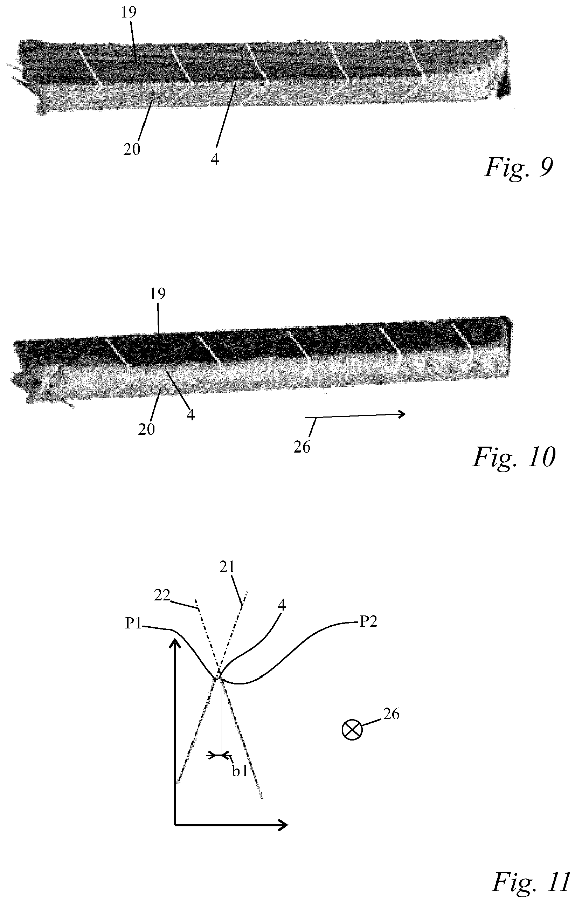

Fig. 9 zeigt das Foto einer scharfen Dachschneide 4. In Fig. 11 sind Höhenprofile der scharfen Dachschneide 4 aus Fig. 9 dargestellt. Die x-Achse und die y-Achse spannen eine Ebene senkrecht zur Längsrichtung 26 der Dachschneide 4 auf. Die obere Flanke 19 erstreckt sich in einer oberen Ebene 21. Die untere Flanke 20 erstreckt sich in einer unteren Ebene 22. Die obere Flanke 19 und die untere Flanke 20 sind über die Dachschneide 4 miteinander verbunden. Die Dachschneide 4 liegt im scharfen Zustand nahe bei der Schnittlinie der oberen Ebene 21 und der unteren Ebene 22. Die Dachschneide 4 ist der Teil des Schneidzahns 14, der zwischen der oberen Flanke 19 und der unteren Flanke 20, aber nicht in der oberen Ebene 21 und nicht in der unteren Ebene 22 liegt. Die Dachschneide 4 weist im scharfen Zustand eine Breite b1 auf. Die Breite b1 ist zwischen zwei Punkten P1 und P2 gemessen, die zu der Schnittlinie zwischen der oberen Ebene 21 und der unteren Ebene 22 jeweils den gleichen Abstand aufweisen. Die Punkte P1 und P2 weisen zu dem ersten Berührpunkt zwischen der oberen Flanke 19 und der oberen Ebene 21 und zu dem ersten Berührpunkt zwischen der unteren Flanke 20 und der unteren Ebene 22 jeweils denselben Abstand auf. Der Punkt P1 ist der oberen Ebene 21 und der Punkt P2 ist der unteren Ebene 22 zugeordnet. Die beiden Punkte P1 und P2 liegen in einer gemeinsamen Ebene, die senkrecht auf die Längsrichtung 26 der Dachschneide 4 steht. Die Breite b1 erstreckt sich in Richtung der x-Achse.

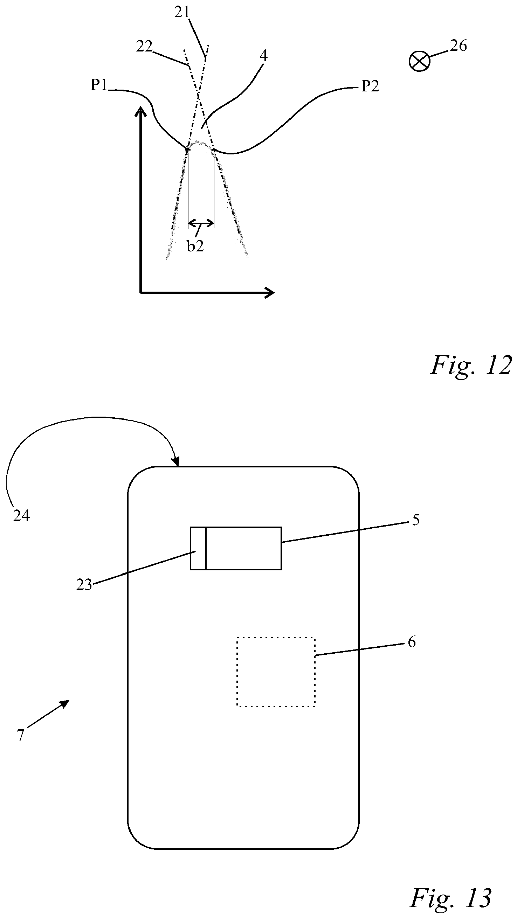

Fig. 10 zeigt ein Foto der Dachschneide 4 nach intensiver Benutzung der Sägekette 1. In Fig. 12 sind Höhenprofile der abgenutzten Dachschneide 4 aus Fig. 10 dargestellt. Die Darstellung ist analog zu der für die scharfe Dachschneide 4 in Fig. 11. Eine Breite b2 der stumpfen Dachschneide 4 wird analog zu der Breite b1 einer scharfen Dachschneide 4 gemessen. Die Breite b2 der stumpfen Dachschneide 4 ist größer als die Breite b1 der scharfen Dachschneide 4. Die Breite b1, b2 der Dachschneide 4 beträgt weniger als 1 mm, insbesondere weniger als 750 µm, insbesondere weniger als 500 µm, insbesondere weniger als 300 µm. Die Breite b1 einer scharfen Dachschneide 4 beträgt weniger als 100 µm. Die Breite b2 einer stumpfen Dachschneide 4 beträgt weniger als 200 µm. Die Breite b1 einer scharfen Dachschneide 4 beträgt mindestens 10 µm. Die Breite b2 einer stumpfen Dachschneide 4 beträgt mindestens 80 µm.

Fig. 13 zeigt eine schematische Darstellung eines tragbaren Geräts 7. Das tragbare Gerät 7 dient zur Bestimmung eines Schärfezustands der Sägekette 1. Das tragbare Gerät 7 umfasst eine Abbildungsvorrichtung 5 und eine Auswerteeinheit 6. Die Abbildungsvorrichtung 5 und die Auswerteeinheit 6 sind in das tragbare Gerät 7 integriert. Es kann aber auch vorgesehen sein, die Bestimmung des Schärfezustands der Sägekette 1 mit einer Abbildungsvorrichtung und einer Auswerteeinheit vorzunehmen, die vollständig getrennt voneinander ausgebildet sind. Im Ausführungsbeispiel ist das tragbare Gerät 7 ein Handy.

Die Abbildungsvorrichtung 5 besitzt einen Bildsensor mit höchstens 12 Megapixeln. Es kann auch vorgesehen sein, dass der Bildsensor höchstens 10 Megapixel besitzt. Der Bildsensor weist eine Maximalgröße von 7,2 mm × 5,4 mm auf. Es kann auch vorgesehen sein, dass der Bildsensor eine Maximalgröße von höchstens 4,5 mm × 3,4 mm aufweist. Jegliche Kombination der genannten Anzahl an Pixeln und der genannten Maximalgrößen des Sensors kann angewendet werden.

Zur Bestimmung des Schärfezustands der Sägekette 1 der Motorkettensäge 2 wird mit der Abbildungsvorrichtung 5 eine Dachschneiden-Abbildung von der Dachschneide 4 des Schneidglieds 3 aufgenommen. Die Dachschneiden-Abbildung ist eine Fotografie. Die Dachschneiden-Abbildung ist eine digitale Fotografie. Die Abbildungsvorrichtung 5 ist eine Kamera. Die Abbildungsvorrichtung 5 ist eine Digitalkamera. Im Ausführungsbeispiel ist die Abbildungsvorrichtung 5 eine Handykamera.

Mit der Auswerteeinheit 6 wird eine Auswertung der Dachschneiden-Abbildung vorgenommen. Die Auswerteeinheit 6 umfasst ein künstliches neuronales Netzwerk. Im Ausführungsbeispiel handelt es sich hierbei um ein "Convolutional Neural Network". Dies lässt sich etwa mit "faltendes neuronales Netzwerk" übersetzen.

Grundsätzlich besteht die Struktur eines Convolutional Neural Networks aus einem oder mehreren Convolutional Layern, gefolgt von einem Pooling Layer. Diese Einheit kann sich prinzipiell beliebig oft wiederholen.

Die Aktivität jedes Neurons wird im Convolutional Layer über eine diskrete Faltung berechnet. Dabei wird schrittweise eine vergleichsweise kleine Faltungsmatrix (Filterkernel) über die Eingabe bewegt. Die Eingabe eines Neurons im Convolutional Layer berechnet sich als inneres Produkt des Filterkernels mit dem aktuell unterliegenden Bildausschnitt in Form von einigen Pixeln. Dementsprechend reagieren benachbarte Neuronen im Convolutional Layer auf sich überlappende Bereiche (ähnliche Frequenzen in Audiosignalen oder lokale Umgebungen in Bildern).

Der nachfolgende Schritt wird im Pooling Layer durchgeführt. Hier werden überflüssige Informationen verworfen. Beispielsweise kann zur Objekterkennung in Fotos die exakte Position einer Kante im Foto von vernachlässigbarem Interesse sein ― die ungefähre Lokalisierung eines Features ist hinreichend. Es gibt verschiedene Arten des Poolings. Mit Abstand am stärksten verbreitet ist das Max-Pooling, wobei aus jedem 2 × 2 Quadrat aus Neuronen des Convolutional Layers nur die Aktivität des aktivsten (daher "Max") Neurons für die weiteren Berechnungsschritte beibehalten wird; die Aktivität der übrigen Neuronen wird verworfen. Trotz der Datenreduktion (im Beispiel 75%) verringert sich in der Regel die Performance des Netzwerks nicht durch das Pooling.

Im Ausführungsbeispiel handelt es sich bei dem Convolutional Neural Network um eine Ableitung der mit "feed forward" bezeichneten neuronalen Netze. Feed Forward Neuronale Netze bestehen aus einer Eingabe- und einer Ausgabeschicht, sowie beliebig vielen verdeckten Schichten. Neuronen einer Schicht sind mit allen Neuronen der darauf folgenden Schicht verbunden und werden Fully Connected Layer genannt. Die Verarbeitung der Daten erfolgt nur von vorne nach hinten. Das Convolutional Neural Network umfasst ein Convolutional Layer gefolgt von einem Pooling Layer. Diese Abfolge kann beliebig oft wiederholt werden.

Bei dem künstlichen neuronalen Netzwerk kann es sich beispielsweise um das neuronale Netzwerk VGG16 handeln. Es ist aber auch jedes andere neuronale Netzwerk denkbar. Im Ausführungsbeispiel wird das künstliche neuronale Netzwerk Mobile Net V2 verwendet.

In der Auswerteeinheit 6 ist ein scharfer Zustand der Sägekette 1 definiert. In der Auswerteeinheit 6 ist ein stumpfer Zustand der Sägekette 1 definiert. Die Sägekette 1, von der die Dachschneiden-Abbildung aufgenommen wurde, wird anhand der Dachschneiden-Abbildung unter Verwendung des künstlichen neuronalen Netzwerks dem scharfem Zustand oder dem stumpfen Zustand zugeordnet.

In dem künstlichen neuronalen Netzwerk ist ein Datensatz von digitalen Abbildungen von Dachschneiden 4 von scharfen Sägeketten 1 und von digitalen Abbildungen von Dachschneiden 4 von stumpfen Sägeketten 1 hinterlegt. Eine Sägekette 1 wird dann als scharf bezeichnet, wenn ihre Schnittleistung mindestens 80% der Schnittleistung einer Referenzsägekette bei gleichen Arbeitsbedingungen erreicht. Eine Sägekette 1 wird dann als stumpf bezeichnet, wenn sie höchstens 65%, insbesondere höchstens 60% der Schnittleistung der Referenzsägekette bei gleichen Arbeitsbedingungen erreicht. Die Referenzsägekette ist eine scharfe Sägekette. Die Breite der Dachschneiden der Referenzsägekette beträgt weniger als 50 µm. Die Breite der Dachschneiden der Referenzsägekette beträgt ungefähr 40 µm. Es kann aber auch vorgesehen sein, dass eine Sägekette dann als scharf bezeichnet wird, wenn sie mindestens 70% der Schnittleistung einer Referenzsägekette bei gleichen Arbeitsbedingungen liefert; eine Sägekette wird in diesem Fall dann als stumpf bezeichnet, wenn sie weniger als 70% der Schnittleistung der Referenzsägekette bei gleichen Arbeitsbedingungen liefert.

Digitale Abbildungen von Dachschneiden 4 von scharfen Sägeketten sind dem scharfen Zustand zugeordnet. Digitale Abbildungen von Dachschneiden 4 von stumpfen Sägeketten sind dem stumpfen Zustand zugeordnet. Durch diese Zuordnung kann das neuronale Netzwerk lernen, welche Parameter für die Zuordnung einer Sägekette 1 mit unbekanntem Schärfezustand besonders wichtig sind. Auch eine Gewichtung der Parameter kann anhand dieses Datensatzes bestimmt werden. Als Eingangswerte werden dem künstlichen neuronalen Netzwerk in der Lernphase die Pixelwerte der digitalen Abbildungen zugeführt. Die Zuordnung der digitalen Abbildung zu dem scharfen Zustand oder zu dem stumpfen Zustand wird dem künstlichen neuronalen Netzwerk in der Lernphase ebenfalls zugeführt. Bei Anwendung des erfindungsgemäßen Verfahrens zur Bestimmung des Schärfezustands einer Sägekette mit unbekanntem Schärfezustand werden dem neuronalen Netzwerk als Eingangswerte die Pixelwerte der Dachschneiden-Abbildung zugeführt. Ein Pixelwert umfasst die Positionsangabe des Pixels auf der jeweiligen Abbildung in Relation zu anderen Pixeln und einen zugeordneten Farbwert. Mit diesen Eingangs-Pixelwerten führt das neuronale Netzwerk seine erlernte Analyse-Methode durch und ordnet die Sägekette, von der die Dachschneiden-Abbildung aufgenommen wurde, dem scharfen oder dem stumpfen Zustand zu. Die erlernte Analyse-Methode besteht in der erlernten Gewichtung der einzelnen Bildpixel. Diese Gewichtung wird in Form einer Faltungsmatrix vorgenommen. Die Faltungsmatrix ist erlernt.

Das künstliche neuronale Netzwerk entscheidet anhand des Datensatzes und der Dachschneiden-Abbildung, ob die Sägekette 1 dem stumpfen Zustand oder dem scharfen Zustand zuzuordnen ist.

In der Auswerteeinheit 6 sind genau zwei Zustände für den Schärfezustand der Sägekette 1 definiert. Es kann aber auch vorgesehen sein, dass mehrere Zustände für den Schärfezustand der Sägekette definiert sind.

Zur Aufnahme der Dachschneiden-Abbildung von der Dachschneide 4, deren Schärfezustand bestimmt werden soll, sind keine besonderen Aufnahmeverhältnisse zu schaffen. Die Dachschneiden-Abbildung kann unter undefinierten Lichtverhältnissen aufgenommen werden. Die Dachschneiden-Abbildung kann unter einem undefinierten Winkel aufgenommen werden.

Die Dachschneiden-Abbildung wird in digitaler Form an die Auswerteeinheit 6 übergeben. Im Ausführungsbeispiel ist die Abbildungsvorrichtung 5 hierfür elektronisch mit der Auswerteeinheit 6 verbunden.

Im Ausführungsbeispiel ist die Auswerteeinheit 6 ein Chip des Handys. Auf dem Handy ist eine Anwendung installiert. Die Anwendung ist Teil des Verfahrens zur Bestimmung des Schärfezustands. Die Anwendung ist ein Programm, mit dem das künstliche neuronale Netzwerk umgesetzt wird. Die Dachschneiden-Abbildung der Dachschneide 4 der Sägekette 1, deren Schärfezustand zu bestimmen ist, wird der Anwendung zugeführt. Die Anwendung führt die Dachschneiden-Abbildung dem künstlichen neuronalen Netzwerk zu, das anhand der angelernten Gewichtungsparameterentscheidet, ob die Sägekette 1 dem scharfen oder dem stumpfen Zustand zuzuordnen ist.

Die mit der Abbildungsvorrichtung 5 aufgenommene Dachschneiden-Abbildung weist eine Auflösung von mindestens 10 px/mm, insbesondere von mindestens 12 px/mm auf.

Die Dachschneiden-Abbildung weist im Ausführungsbeispiel eine Auflösung von höchstens 128 px/mm auf. Es kann aber auch vorgesehen sein, dass die Dachschneiden-Abbildung eine Auflösung von höchstens 64 px/mm, insbesondere von höchstens 32 px/mm, insbesondere von höchstens 24 px/mm aufweist.

Für eine erfolgreiche Zuordnung der Sägekette 1 zum scharfen Zustand oder zum stumpfen Zustand kann die Auflösung der Dachschneiden-Abbildung um mindestens einen Faktor 10 kleiner sein als bei einem herkömmlichen Messverfahren zur Bestimmung des Schärfezustands einer Sägekette. Bei einem herkömmlichen Messverfahren zur Bestimmung des Schärfezustands einer Sägekette wird die Breite der Dachschneide aus einer Dachschneiden-Abbildung ausgemessen. Hierbei muss der Messfehler kleiner als 1% sein. Dadurch ist eine sehr hohe Auflösung für die Dachschneiden-Abbildung erforderlich. Bei einer Breite der Dachschneide von ungefähr 100 µm wird für einen Messfehler kleiner als 1% eine Auflösung für die Dachschneiden-Abbildung von etwa 1000 px/mm benötigt, um eine zuverlässige Aussage über den Schärfezustand der Sägekette machen zu können. Beim erfindungsgemäßen Verfahren zur Bestimmung des Schärfezustands unter Verwendung eines neuronalen Netzwerkes reicht eine Auflösung der Dachschneiden-Abbildung von unter 100 px/mm für eine erfolgreiche Zuordnung zum scharfen oder stumpfen Zustand aus.

Es kann vorgesehen sein, dass die Dachschneiden-Abbildung unter Einsatz eines Blitzlichts aufgenommen wird. Hierzu ist ein Blitzgerät 23 vorgesehen (Fig. 13). Im Ausführungsbeispiel ist das Blitzgerät 23 in das tragbare Gerät 7 integriert.

Die Auswerteeinheit 6 gibt die Zuordnung der Dachschneiden-Abbildung der Dachschneide 4 der Sägekette 1, deren Schärfezustand zu bestimmen ist, zu dem scharfen Zustand oder dem stumpfen Zustand in Form einer Anzeige aus. Hierzu ist ein Display 24 vorgesehen. Das Display 24 ist im Ausführungsbeispiel in das tragbare Gerät 7 integriert. Auf dem Display 24 wird angezeigt, ob die untersuchte Sägekette 1 als scharf oder stumpf kategorisiert wird.

Die Auswerteeinheit 6 gibt in Abhängigkeit der Zuordnung der untersuchten Sägekette 1 zum scharfen Zustand oder zum stumpfen Zustand eine Handlungsanweisung aus. Die Handlungsanweisung kann beispielsweise darin bestehen, eine Anleitung zum Nachschärfen der Sägekette 1 auszugeben. Eine solche Anleitung zum Nachschärfen der Sägekette 1 kann die Angabe von benötigtem Werkzeug, insbesondere von einem bestimmten Feilentyp umfassen.

Die Handlungsanweisung kann aber beispielsweise auch darin bestehen, eine Kaufempfehlung für ein Ersatzteil auszugeben. Das Ersatzteil kann insbesondere eine neue Sägekette 1, ein neues Kettenrad oder eine neue Führungsschiene 8 sein. Es ist auch möglich, dass eine Kaufempfehlung für mehrere Ersatzteile, insbesondere für eine beliebige Kombination der genannten Ersatzteile ausgegeben wird.

Es kann vorgesehen sein, dass mindestens zwei, insbesondere mindestens drei Dachschneiden-Abbildungen von mindestens zwei, bzw. insbesondere mindestens drei verschiedenen Dachscheiden 4 der Sägekette 1 gemacht werden. Insbesondere wertet die Auswerteeinheit 6 alle der mindestens zwei, bzw. alle der mindestens drei Dachschneiden-Abbildungen aus, um zu entscheiden, ob die Sägekette 1 dem stumpfen Zustand oder dem scharfen Zustand zuzuordnen ist. Bei ungerader Anzahl der ausgewerteten Dachschneiden-Abbildungen zählt die Auswerteeinheit 6, ob die untersuchten Dachschneiden-Abbildungen mehrheitlich als scharf oder als stumpf kategorisiert wurden. Die Mehrheit entscheidet darüber, ob die gesamte Sägekette 1 dem scharfen oder dem stumpfen Zustand zugeordnet wird.

## Patentansprüche

1. Verfahren zur Bestimmung eines Schärfezustands einer Sägekette (1) einer Motorkettensäge (2), wobei die Sägekette (1) zumindest ein Schneidglied (3) mit einer Dachschneide (4) umfasst, wobei mit einer Abbildungsvorrichtung (5) eine Dachschneiden-Abbildung von der Dachschneide (4) des Schneidglieds (3) aufgenommen wird,
**dadurch gekennzeichnet, dass** mit einer Auswerteeinheit (6), die ein künstliches neuronales Netzwerk umfasst, eine Auswertung der Dachschneiden-Abbildung vorgenommen wird, dass in der Auswerteeinheit (6) ein scharfer Zustand der Sägekette (1) definiert ist, dass in der Auswerteeinheit (6) ein stumpfer Zustand der Sägekette (1) definiert ist, und dass die Sägekette (1) anhand der Dachschneiden-Abbildung unter Verwendung des künstlichen neuronalen Netzwerks dem scharfen Zustand oder dem stumpfen Zustand zugeordnet wird.

2. Verfahren nach Anspruch 1,
**dadurch gekennzeichnet, dass** die Dachschneiden-Abbildung unter undefinierten Lichtverhältnissen in einem undefinierten Winkel aufgenommen wird.

3. Verfahren nach Anspruch 1 oder 2,
**dadurch gekennzeichnet, dass** die Dachschneiden-Abbildung in digitaler Form an die Auswerteeinheit (6) übergeben wird.

4. Verfahren nach einem der Ansprüche 1 bis 3,
**dadurch gekennzeichnet, dass** die Dachschneiden-Abbildung eine Auflösung von mindesten 10 px/mm, insbesondere von mindestens 12 px/mm aufweist.

5. Verfahren nach einem der Ansprüche 1 bis 4,
**dadurch gekennzeichnet, dass** die Dachschneiden-Abbildung eine Auflösung von höchsten 128 px/mm, insbesondere von höchstens 64 px/mm, insbesondere von höchsten 32 px/mm, bevorzugt von höchstens 24 px/mm aufweist.

6. Verfahren nach einem der Ansprüche 1 bis 5,
**dadurch gekennzeichnet, dass** eine Zuordnung der Sägekette (1) zu dem scharfen Zustand oder dem stumpfen Zustand auch bei der Auswertung von einer Dachschneiden-Abbildung mit einer Auflösung von höchstens 128 px/mm, insbesondere von höchstens 64 px/mm, insbesondere von höchstens 32 px/mm, bevorzugt von höchstens 24 px/mm mit einer Erfolgsquote für eine korrekte Zuordnung von mindestens 80% erfolgt.

7. Verfahren nach einem der Ansprüche 1 bis 6,
**dadurch gekennzeichnet, dass** die Abbildungsvorrichtung einen Bildsensor mit höchstens 12 Megapixeln, insbesondere mit höchstens 10 Megapixeln aufweist, und dass der Bildsensor eine Maximalgröße von 7,2 mm × 5,4 mm, insbesondere von 4,5 mm × 3,4 mm aufweist.

8. Verfahren nach einem der Ansprüche 1 bis 7,
**dadurch gekennzeichnet, dass** eine Länge (1) der Dachschneide (4) von 3 mm bis 5 mm beträgt.

9. Verfahren nach einem der Ansprüche 1 bis 8,
**dadurch gekennzeichnet, dass** die Breite (b1, b2) der Dachschneide (4) weniger als 500 µm, insbesondere weniger als 300 µm, insbesondere weniger als 150 µm beträgt.

10. Verfahren nach einem der Ansprüche 1 bis 9,
**dadurch gekennzeichnet, dass** in der Auswerteeinheit (6) genau zwei Zustände für den Schärfezustand der Sägekette (1) definiert sind.

11. Verfahren nach Anspruch einem der Ansprüche 1 bis 10,
**dadurch gekennzeichnet, dass** das künstliche neuronale Netzwerk auf einen Datensatz von digitalen Abbildungen von Dachschneiden (4) von scharfen Sägeketten (1) und von Dachschneiden (4) von stumpfen Sägeketten (1) zurückgreift, wobei eine scharfe Sägekette (1) mindestens 80% der Schnittleistung einer Referenzsägekette bei gleichen Arbeitsbedingungen liefert, wobei eine stumpfe Sägekette (1) höchstens 65%, insbesondere höchsten 60% der Schnittleistung der Referenzsägekette bei gleichen Arbeitsbedingungen liefert, dass die scharfen Sägeketten (1) dem scharfen Zustand zugeordnet sind, und dass die stumpfen Sägeketten (1) dem stumpfen Zustand zugeordnet sind.

12. Verfahren nach einem der Ansprüche 1 bis 11,
**dadurch gekennzeichnet, dass** die Dachschneiden-Abbildung unter Einsatz eines Blitzlichts aufgenommen wird.

13. Verfahren nach einem der Ansprüche 1 bis 12,
**dadurch gekennzeichnet, dass** das die Auswerteeinheit (6) anhand des ermittelten Schärfezustands der Sägekette (1) eine Handlungsanweisung ausgibt.

14. Verfahren nach Anspruch 13,
**dadurch gekennzeichnet, dass** die Handlungsanweisung eine Anleitung zum Nachschärfen der Sägekette (1) umfasst.

15. Verfahren nach einem der Ansprüche 1 bis 14,
**dadurch gekennzeichnet, dass** mindestens zwei, insbesondere mindestens drei Dachschneiden-Abbildungen von mindestens zwei, insbesondere mindestens drei verschiedenen Dachschneiden (4) der Sägekette (1) gemacht werden, und dass die Auswerteeinheit (6) die mindestens zwei, insbesondere mindestens drei Dachschneiden-Abbildungen auswertet, um zu entscheiden, ob die Sägekette (1) dem stumpfen Zustand oder dem scharfen Zustand zuzuordnen ist.

16. Verfahren nach einem der Ansprüche 1 bis 15,
**dadurch gekennzeichnet, dass** die Abbildungsvorrichtung (5) und die Auswerteeinheit (6) zusammen in ein einziges tragbares Gerät (7) integriert sind.
